# EUROPEAN PATENT APPLICATION

(11) **EP 2 085 367 A2**
(43) Date of publication of application: **05.08.2009**
(21) Application number: 09151834.0
(22) Date of filing: 31.01.2009
(51) Int. Cl.: C04B 28/04, C04B 14/06, C04B 24/38, C04B 24/08

(54) **Adhesive mortar especially for shaped clinker bricks**

(30) Priority: 01.02.2008 PL 38436508
(71) Applicant: ALPOL Gips Sp. z o.o., 26-200 Konskie (PL)
(72) Inventor: Czesak, Zofia, 26-060 Checiny (PL); Gumulka, Wladyslaw, 25-113 Kielce (PL)
(74) Representative: Fietko-Basa, Sylwia

(57) **Abstract**

The adhesive mortar especially for shaped clinker bricks, consisting of dry cement mixture, filling materials and chemical additives and needing only addition of water, according to the invention is characterized by content, taking into consideration its mass, of 28-36% Portland cement, between 45 and 70% quartz sand with 0,1 - 1,25 mm grains, between 5 and 10% lime flour with grain-size distribution of 0,1 - 0,5 mm, and between 1 and 7% quartz flour with grain-size distribution up to 0,3 mm, between 0,2 and 0,6% modified cellulose ether, between 2 and 5% redispersion powder, between 0,05 and 0,5% hydrophobic agent based on the mixture of sodium oleate and calcium stearate, between 2,5 and 7,0% fly ash, between 0,02 and 0,06% modified starch ether, between 0,4 and 1,0% cellulose fibers, between 0,21 and 0,5% hydrophobization agent in the form of silicon powder in wax mini-capsules, between 0,05 and 0, 1 % retardants of cement binding and between 0,05 and 0,8% nanometer-sized additive belonging to the group of silicates.

## Description

Adhesive mortar especially for shaped clinker bricks

An object of this invention is an adhesive mortar especially for shaped clinker bricks that bonds together facing shaped clinker bricks and tiles on any type of vertical and horizontal surfaces and any other ceramic cladding and natural or artificial stone blocks and on deformable preheated bases subjected to action of atmospheric factors. This invention finds its most important application in building industry.

The goal of this invention is to formulate an adhesive mortar that is resistant to migration of soluble salts and thus resistant to efflorescence occurrence. Migrating salts may come from components of mortars or shaped clinker bricks, made of improper raw materials, or from the base because of defective hydro insulation as well as be a result of atmospheric interactions with components of the adhesive mortar.

Hitherto, all known adhesive mortars, preventing from occurrence of efflorescence, contained pozzolanic additives, especially fly ash or silica dusts or trass flour and/or hydraulic additive, that is mostly ground granular blast furnace slag, that all bind calcium hydroxide and/or hydrophobic aerating additives and/or starch ethers.

The adhesive mortar especially for shaped clinker bricks, consisting of dry cement mixture, filling materials and chemical additives and needing only addition of water, according to the invention is characterized by content, taking into consideration its mass, of 28 - 36% Portland cement, between 45 and 70% quartz sand with grain-size distribution of 0,1 - 1,25 mm grains, between 5 and 10% lime flour with grain-size distribution of 0,1 - 0,5 mm, and between 1 and 7% quartz flour with grain-size distribution of up to 0,3 mm, between 0,2 and 0,6% modified cellulose ether, between 2 and 5% redispersion powder, between 0,05 and 0,5% hydrophobic agent based on the mixture of sodium oleate and calcium stearate, between 2,5 and 7,0% fly ash, between 0,02 and 0,06% modified starch ether, between 0,4 and 1,0% cellulose fibers, between 0,2 and 0,5% hydrophobization agent in the form of silicon powder in wax minicapsules, between 0,05 and 0,1% retardants of cement binding and between 0,05 and 0,8% nanometer-sized additive especially belonging to the group of silicates.

The adhesive mortar, according to the invention, also contains preferably between 1 and 10% pozzolanic additives, especially fly ash or micro-silica or trass flour, and/or between 1 and 5% hydraulic additive, especially ground granular blast furnace slag, and/or 1,0 - 7,0% micro-silica and/or starch ethers and/or additives improving elasticity, added especially in the form of ready dispersion of acryl copolymer resins and/or resins of styrene-butadiene copolymer accounting for up to 5%, and/or retardants and/or accelerators of cement binding and hardening, widely known on the market, and/or plasticizers or super plasticizers in the amount between 0,5 and 2% of cement mass and/or other additives modifying its rheology, especially guar gum ethers accounting for 0,05 up to 0,5% of the mass.

The adhesive mortar especially for shaped clinker bricks, according to the invention, maintains its physical and chemical properties in the full value ranges.

The adhesive mortar , according to the invention, presents much greater resistance to migration of soluble salts as well as lower water absorption, decreased absorbability, increased density of hardened mortar and increased adhesion in comparison to products of this type, already existing on the market, what was confirmed by tests of adhesion, density and absorption, absorbability and resistance to migration of saturated solution of sodium sulfate of hardened mortar.

Tests in accordance with standard EN 1348 confirmed that the adhesive mortar, the object of this invention, presents significant tensile adhesion strength in comparison to adhesives available on the market and meets the requirements of C2T class. Open-time test in conformity with standard EN 1346, slip test in conformity with standard EN 1308, and transverse deformation test in conformity with standard EN 12002 confirmed following results, that is open time accounting for 20 minutes, flow-off not exceeding 0,5 mm and transverse strain consistent with S1 class.

Test in accordance with standard PN EN 1015-18 confirmed that the adhesive mortar, the object of this invention, reveals the lowest water absorption in comparison to other adhesives, available on the market.

Test, consisting in storage of the adhesive in saturated solution of sodium sulfate, confirmed that the object of this invention, that is the adhesive mortar containing nano-additives demonstrates much greater resistance to migration of soluble salt.

Example 1

To obtain the adhesive mortar for practical use, following ingredients were used: taking into consideration its mass 35% CEM I Portland cement, 50% quartz sand with grain-size distribution of 0,1 - 1,25 mm, 7,0% lime flour with grain-size distribution of 0,1 - 0,5 mm, 3% quartz flour with grain-size distribution of up to 0,3 mm, 5,0% fly ash, 0,5% modified methylhydroxyethylcellulose with viscosity of 11000 - 15000 mPa·s, 3,5% redispersion powder based on vinyl and ethylene acetate copolymer, 0,5% hydrophobic agent based on the mixture of sodium oleate and calcium stearate, 0,05% modified starch ether, 1,0% cellulose fibers, 0,5% hydrophobization agent in the form of silicon powder in wax mini-capsules, up to 0,1% citric acid, 0,5% nanometer-sized additive belongs to the group of silicates, alkaline activated, modified by organic ingredients and 25,0% water in relation to dry mass. The adhesive was prepared to tests in compliance with standard PN-EN ISO 15605:2005. Next, following tests were performed:

- tensile adhesion strength test in accordance with EN 1348;

- open-time test in accordance with EN 1346;

- slip test in accordance with EN 1308;

- transverse deformation test in accordance with EN 12002.

Moreover:

Water absorption test according to standard PN EN 1015-18 "Test methods for mortars" - Part 18: Determination of coefficient of water absorption, caused by capillary action of hardened mortar". This test consists in measurement of the amount of water absorbed on fractures of hardened and seasoned blocks of 4x4x16 cm in size in relation to time.

Mortar capability to inhibit migration of sodium sulfate according to our own method has also been checked. This test consists in storage of blocks of 4x4x16 cm in size, made of the mortar, in saturated solution of sodium sulfate for the period of 2 months. An observation of the surface and migration of salt through the mortar of the block, broken into halves, after 2 months is the result of this test. The following results were obtained in this example:

water absorption - 0,032 kg/(m²•min^{0.5})

mortar capability to inhibit migration of sodium sulfate - lack of crystallized salts inside the mortar as well as on its surface. The mortar beam surface clean, without cracks, spalling and salting.

Example 2

To obtain the adhesive mortar for practical use, following ingredients were used: taking into consideration its mass 28% CEMI Portland cement, 57% quartz sand with grain-size distribution of 0,1 - 1,25 mm, 6,0% lime flour with grain-size distribution of 0,1 - 0,5 mm, 6% quartz flour with grain-size distribution of up to 0,3 mm, 3,0% fly ash, 0,4% modified methylhydroxyethylcellulose with viscosity of 11000 - 15000 mPa·s, 2,5% redispersion powder based on vinyl and ethylene acetate copolymer, 0,2% hydrophobic agent based on the mixture of sodium oleate and calcium stearate, 0,05% modified starch ether, 0,4% cellulose fibers, 0,21% hydrophobization agent in the form of silicon powder in wax mini-capsules, up to 0,05% citric acid, 0,2% nanometer-sized additive belongs to the group of silicates, alkaline activated, modified by organic ingredients, 2% additives improving elasticity, added especially in the form of ready dispersion of acrylic copolymer resins and 23,0% water in relation to dry mass. The adhesive was prepared to tests in compliance with standard PN-EN ISO 15605:2005. Next, following tests were performed:

- tensile adhesion strength test in accordance with EN 1348;

- open-time test in accordance with EN 1346;

- slip test in accordance with EN 1308;

- transverse deformation test in accordance with EN 12002.

Moreover:

Water absorption test according to standard PN EN 1015-18 "Test methods for mortars" - Part 18: Determination of coefficient of water absorption, caused by capillary action of hardened mortar". This test consists in measurement of the amount of water absorbed on fractures of hardened and seasoned blocks of 4x4x16 cm in size in relation to time.

Mortar capability to inhibit migration of sodium sulfate according to our own method has also been checked. This test consists in storage of blocks of 4x4x16 cm in size, made of the mortar, in saturated solution of sodium sulfate for the period of 2 months. An observation of the surface and migration of salt through the mortar of the block, broken into halves, after 2 months is the result of this test. The following results were obtained in this example:

water absorption - 0,040 kg/(m²•min^{0.5})

mortar capability to inhibit migration of sodium sulfate - lack of crystallized salts inside the mortar as well as on its surface. The mortar beam surface clean, without cracks, spalling and salting.

Example 3

To obtain the adhesive mortar for practical use, following ingredients were used: taking into consideration its mass 29% CEMI Portland cement, 62,5% quartz sand with grain-size distribution of 0,1 - 1,25 mm, 5,0% lime flour with grain-size distribution of 0,1 - 0,5 mm, 1% quartz flour with grain-size distribution of up to 0,3 mm, 2,5% fly ash, 0,35% modified methylhydroxyethylcellulose with viscosity of 11000 - 15000 mPa·s, 4,5% redispersion powder based on vinyl and ethylene acetate copolymer, 0,1% hydrophobic agent based on the mixture of sodium oleate and calcium stearate, 0,02% modified starch ether, 0,8% cellulose fibers, 0,3% hydrophobization agent in the form of silicon powder in wax mini-capsules, up to 0,1% citric acid, 0,8% nanometer-sized additive belongs to the group of silicates, alkaline activated, modified by organic ingredients and 21,0% water in relation to dry mass. The adhesive was prepared to tests in compliance with standard PN-EN ISO 15605:2005. Next, following tests were performed:

- tensile adhesion strength test in accordance with EN 1348;

- open-time test in accordance with EN 1346;

- slip test in accordance with EN 1308;

- transverse deformation test in accordance with EN 12002.

Moreover:

Water absorption test according to standard PN EN 1015-18 "Test methods for mortars" - Part 18: Determination of coefficient of water absorption, caused by capillary action of hardened mortar". This test consists in measurement of the amount of water absorbed on fractures of hardened and seasoned blocks of 4x4x16 cm in size in relation to time.

Mortar capability to inhibit migration of sodium sulfate according to our own method has also been checked. This test consists in storage of blocks of 4x4x16 cm in size, made of the mortar, in saturated solution of sodium sulfate for the period of 2 months. An observation of the surface and migration of salt through the mortar of the block, broken into halves, after 2 months is the result of this test. The following results were obtained in this example:

water absorption - 0,015 kg/(m²•min^{0.5})

mortar capability to inhibit migration of sodium sulfate - lack of crystallized salts inside the mortar as well as on its surface. The mortar beam surface clean, without cracks, spalling and salting.

Example 4

To obtain the adhesive mortar for practical use, following ingredients were used: taking into consideration its mass 35% CEMI Portland cement, 50% quartz sand with grain-size distribution of 0,1 - 1,25 mm, 4,0% lime flour with grain-size distribution of 0,1 - 0,5 mm, 3% quartz flour with grain-size distribution of up to 0,3 mm, 5,0% fly ash, 0,5% modified methylhydroxyethylcellulose with viscosity of 11000 - 15000 mPa·s, 3,5% redispersion powder based on vinyl and ethylene acetate copolymer, 0,5% hydrophobic agent based on the mixture of sodium oleate and calcium stearate, 0,05% modified starch ether, 1,0% cellulose fibers, 0,5% hydrophobization agent in the form of silicon powder in wax mini-capsules, up to 0,05% citric acid, 0,5% nanometer-sized additive belongs to the group of silicates, alkaline activated, modified by organic ingredients, 2% ground granular blast furnace slag, 1% micro-silica, 0,05 starch ether, 0,2% calcium formate, and 25,0% water in relation to dry mass. The adhesive was prepared to tests in compliance with standard PN-EN ISO 15605:2005. Next, following tests were performed:

- tensile adhesion strength test in accordance with EN 1348;

- open-time test in accordance with EN 1346;

- slip test in accordance with EN 1308;

- transverse deformation test in accordance with EN 12002.

Moreover:

Water absorption test according to standard PN EN 1015-18 "Test methods for mortars" - Part 18: Determination of coefficient of water absorption, caused by capillary action of hardened mortar". This test consists in measurement of the amount of water absorbed on fractures of hardened and seasoned blocks of 4x4x16 cm in size in relation to time.

Mortar capability to inhibit migration of sodium sulfate according to our own method has also been checked. This test consists in storage of blocks of 4x4x16 cm in size, made of the mortar, in saturated solution of sodium sulfate for the period of 2 months. An observation of the surface and migration of salt through the mortar of the block, broken into halves, after 2 months is the result of this test. The following results were obtained in this example:

water absorption - 0,032 kg/(m²•min^{0.5})

mortar capability to inhibit migration of sodium sulfate - lack of crystallized salts inside the mortar as well as on its surface. The mortar beam surface clean, without cracks, spalling and salting.

Example 5

To obtain the adhesive mortar for practical use, following ingredients were used: taking into consideration its mass 28% CEMI Portland cement, 57% quartz sand with grain-size distribution of 0,1 - 1,25 mm, 5% lime flour with grain-size distribution of 0,1 - 0,5 mm, 3% quartz flour with grain-size distribution of up to 0,3 mm, 3,0% fly ash, 0,3% modified methylhydroxyethylcellulose with viscosity of 11000 - 15000 mPa·s, 2,5% redispersion powder based on vinyl and ethylene acetate copolymer, 0,2% hydrophobic agent based on the mixture of sodium oleate and calcium stearate, 0,05% modified starch ether, 0,4% cellulose fibers, 0,21% hydrophobization agent in the form of silicon powder in wax mini-capsules, up to 0,05% citric acid, 0,2% nanometer-sized additive belongs to the group of silicates, alkaline activated, modified by organic ingredients, 4% ground granular blast furnace slag, 2% additives improving elasticity, added especially in the form of ready dispersion of acrylic copolymer resins, super plasticizer in amount 0,5% of cement mass, 0,05% guar gum ether and 21,0% water in relation to dry mass. The adhesive was prepared to tests in compliance with standard PN-EN ISO 15605:2005. Next, following tests were performed:

- tensile adhesion strength test in accordance with EN 1348;

- open-time test in accordance with EN 1346;

- slip test in accordance with EN 1308;

- transverse deformation test in accordance with EN 12002.

Moreover:

Water absorption test according to standard PN EN 1015-18 "Test methods for mortars" - Part 18: Determination of coefficient of water absorption, caused by capillary action of hardened mortar". This test consists in measurement of the amount of water absorbed on fractures of hardened and seasoned blocks of 4x4x16 cm in size in relation to time.

Mortar capability to inhibit migration of sodium sulfate according to our own method has also been checked. This test consists in storage of blocks of 4x4x16 cm in size, made of the mortar, in saturated solution of sodium sulfate for the period of 2 months. An observation of the surface and migration of salt through the mortar of the block, broken into halves, after 2 months is the result of this test. The following results were obtained in this example:

water absorption - 0,030 kg/(m²•min^{0.5})

mortar capability to inhibit migration of sodium sulfate - lack of crystallized salts inside the mortar as well as on its surface. The mortar beam surface clean, without cracks, spalling and salting.

Example 6

To obtain the adhesive mortar for practical use, following ingredients were used: taking into consideration its mass 28% CEMI Portland cement, 58% quartz sand with grain-size distribution of 0,1 - 1,25 mm, 7% lime flour with grain-size distribution of 0,1 - 0,5 mm, 2% quartz flour with grain-size distribution of up to 0,3 mm, 3,0% fly ash, 0,2% modified methylhydroxyethylcellulose with viscosity of 11000 - 15000 mPa·s, 2,5% redispersion powder based on vinyl and ethylene acetate copolymer, 0,2% hydrophobic agent based on the mixture of sodium oleate and calcium stearate, 0,05% modified starch ether, 0,4% cellulose fibers, 0,21% hydrophobization agent in the form of silicon powder in wax mini-capsules, up to 0,05% citric acid, 0,2% nanometer-sized additive belongs to the group of silicates, alkaline activated, modified by organic ingredients, 2% ground granular blast furnace slag, 4% additives improving elasticity, added especially in the form of ready dispersion of styrene-butadiene copolymer resins, 0,1% guar gum ether and 21,0% water in relation to dry mass. The adhesive was prepared to tests in compliance with standard PN-EN ISO 15605:2005. Next, following tests were performed:

- tensile adhesion strength test in accordance with EN 1348;

- open-time test in accordance with EN 1346;

- slip test in accordance with EN 1308;

- transverse deformation test in accordance with EN 12002.

Moreover:

Water absorption test according to standard PN EN 1015-18 "Test methods for mortars" - Part 18: Determination of coefficient of water absorption, caused by capillary action of hardened mortar". This test consists in measurement of the amount of water absorbed on fractures of hardened and seasoned blocks of 4x4x16 cm in size in relation to time.

Mortar capability to inhibit migration of sodium sulfate according to our own method has also been checked. This test consists in storage of blocks of 4x4x16 cm in size, made of the mortar, in saturated solution of sodium sulfate for the period of 2 months. An observation of the surface and migration of salt through the mortar of the block, broken into halves, after 2 months is the result of this test. The following results were obtained in this example:

water absorption - 0,040 kg/(m²•min^{0.5})

mortar capability to inhibit migration of sodium sulfate - lack of crystallized salts inside the mortar as well as on its surface. The mortar beam surface clean, without cracks, spalling and salting.

## Claims

1. The adhesive mortar especially for shaped clinker bricks, consisting of dry cement mixture, filling materials and chemical additives and needing only addition of water, **characterized in that** content, taking into consideration its mass, of 28-36% Portland cement, between 45 and 70% quartz sand with 0,1 - 1,25 mm grains, between 5 and 10% lime flour with grain-size distribution of 0,1 - 0,5 mm, and between 1 and 7% quartz flour with grain-size distribution of up to 0,3 mm, between 0,2 and 0,6% modified cellulose ether, between 2 and 5% redispersion powder, between 0,05 and 0,5% hydrophobic agent based on the mixture of sodium oleate and calcium stearate, between 2,5 and 7,0% fly ash, between 0,02 and 0,06% modified starch ether, between 0,4 and 1,0% cellulose fibers, between 0,21 and 0,5% hydrophobization agent in the form of silicon powder in wax mini-capsules, between 0,05 and 0,1% retardants of cement binding and nanometer-sized additive preferably between 0,05 and 0,8%.

2. The adhesive, according to the claim 1, **characterized in that** the nanometer-sized additive belongs to the group of silicates.

3. The adhesive, according to the claim 1 or 2, **characterized in that** preferably content of pozzolanic additives, between 1 and 10% of its mass, especially flue dust or micro-silica or trass flour, and/or between 1 and 5% hydraulic additive, especially ground granular blast furnace slag, and/or 1,0 - 7,0% micro-silica and/or starch ethers and/or additives improving elasticity, added especially in the form of ready dispersion of acryl copolymer resins and/or resins of styrene-butadiene copolymer accounting for up to 5%, and/or retardants and/or accelerators of cement binding and hardening, widely known on the market, and/or plasticizers or super plasticizers in the amount between 0,5 and 2% of cement mass and/or other additives modifying its rheology, especially guar gum ethers accounting for 0,05 up to 0,5% of the mass.
